# EUROPEAN PATENT APPLICATION

(11) **EP 4 382 580 A1**
(43) Date of publication of application: **12.06.2024**
(21) Application number: 22853063.0
(22) Date of filing: 02.08.2022
(51) Int. Cl.: C09D 201/00, C09K 3/30, C11D 7/50, C09K 5/04, C09D 7/20

(54) **SOLVENT COMPOSITION, RINSING METHOD, COATING FILM-PROVIDED ARTICLE MANUFACTURING METHOD, AEROSOL COMPOSITION, AND HEAT TRANSFER MEDIUM**

(30) Priority: 04.08.2021 JP 2021128276
(71) Applicant: AGC INC., Chiyoda-ku, Tokyo 1008405 (JP)
(72) Inventor: KAWAGUCHI Satoshi, Tokyo 100-8405 (JP)
(74) Representative: Müller-Boré & Partner Patentanwälte PartG mbB
(86) International application number: PCT/JP2022/029674
(87) International publication number: WO 2023/013644

(57) **Abstract**

To provide a solvent composition that can suppress corrosion of a metal, a cleaning method using the solvent composition, and a method for producing an article with a coating film.

A solvent composition comprising, as a first component, 1-chloro-2,3,3-trifluoropropene and, as a second component, at least one member selected from the group consisting of 1,2,3,3-tetrachloropropene, 1,2,3-trichloro-3-fluoropropene, 1,3,3-trichloro-2-fluoropropene, 1,3-dichloro-2,3-difluoropropene, 2-chloro-3,3-difluoropropene, 2,3,3-trifluoropropene, 1,3-dichloro-1,2,2-trifluoropropane, 1-chloro-1,2,2,3-tetrafluoropropane, 2-chloro-1,1,3,3-tetrafluoropropane, 2-chloro-1,1,2-trifluoropropane and chloroform, characterized in that the ratio of the total content of the second component to the sum of the content of 1-chloro-2,3,3-trifluoropropene and the total content of the second component, is from 0.0001 to 1.0 mass%.

## Description

### TECHNICAL FIELD

The present invention relates to a solvent composition, a cleaning method using the solvent composition, and a method for producing an article with a coating film.

### BACKGROUND ART

Heretofore, as cleaning solvents for oil stain cleaning, flux cleaning, dust cleaning, etc., moisture removal solvents, dry cleaning solvents, reaction solvents and diluting solvents for lubricants, hydrochlorofluorocarbons (hereinafter referred to also as HCFCs), which are excellent in nonflammability, low-toxicity, and stability, have been used. However, due to concerns about the negative impact of HCFCs on the ozone layer, production of HCFCs was phased out in developed countries in 2020.

As solvents that do not adversely affect the ozone layer, perfluorocarbons (hereafter referred to also as PFCs), hydrofluorocarbons (hereafter referred to also as HFCs), and hydrofluoroethers (hereinafter referred to also as HFEs), etc. are known.

However, HFCs and PFCs are regulated substances under the Kyoto Protocol because of their high global warming potential. Further, as compared with HCFCs, the solubility of oils is low, and the application range of HFCs, HFEs and PFCs is limited.

As a compound that does not adversely affect the global environment and is useful in various applications such as heat transfer media, foaming agents, solvents, and cleaning agents, 1-chloro-2,3,3-trifluoro-1-propene (HCFO-1233yd, hereinafter referred to also as 1233yd) has been proposed (Patent Document 1).

### PRIOR ART DOCUMENT

### PATENT DOCUMENT

Patent Document 1: JP-A-2013-504658

### DISCLOSURE OF INVENTION

### TECHNICAL PROBLEM

The present inventors have found that when 1233yd described in Patent Document 1 was brought into contact with metal, there was a case where corrosion of the metal progressed.

In view of the above problem, the present invention aims to provide a solvent composition that can inhibit corrosion of metal, a cleaning method using the solvent composition, a composition for forming a coating film, a method for producing an article with a coating film, an aerosol composition, and a heat transfer medium.

The present inventors have conducted a study to solve the above problem and, as a result, have found it possible to solve the problem by the following constructions.

(1) A solvent composition comprising, as a first component, 1-chloro-2,3,3-trifluoropropene, and, as a second component, at least one member selected from the group consisting of 1,2,3,3-tetrachloropropene, 1,2,3-trichloro-3-fluoropropene, 1,3,3-trichloro-2-fluoropropene, 1,3-dichloro-2,3-difluoropropene, 2-chloro-3,3-difluoropropene, 2,3,3-trifluoropropene, 1,3-dichloro-1,2,2-trifluoropropane, 1-chloro-1,2,2,3-tetrafluoropropane, 2-chloro-1,1,3,3-tetrafluoropropane, 2-chloro-1,1,2-trifluoropropane and chloroform, characterized in that the ratio of the total content of the second component to the sum of the content of 1-chloro-2,3,3-trifluoropropene and the total content of the second component, is from 0.0001 to 1.0 mass%.
(2) The solvent composition according to (1), which contains, as the second component, at least one member selected from the group consisting of 1,2,3,3-tetrachloropropene, 1,2,3-trichloro-3-fluoropropene, 1,3,3-trichloro-2-fluoropropene, 1,3-dichloro-2,3-difluoropropene, 2-chloro-3,3-difluoropropene and 2,3,3-trifluoropropene.
(3) The solvent composition according to (1) or (2), which further contains, as a third component, at least one member selected from the group consisting of trans-1,2-dichloroethylene, nonafluorobutoxymethane, nonafluorobutoxyethane, ethanol, isopropanol, 1,2-dichloro-2,3,3-trifluoropropane and 1,2-dichloro-3,3-difluoropropene.
(4) The solvent composition according to any one of (1) to (3), wherein the ratio of the content of 1-chloro-2,3,3-trifluoropropene in the solvent composition is at least 30 mass%.
(5) A cleaning method characterized in that the solvent composition as defined in any one of (1) to (4) is brought into contact with an article to remove stains attached to the surface of the article.
(6) The cleaning method according to (5), wherein the material of at least a portion of the article surface to be in contact with the solvent composition is metal.
(7) A composition for forming a coating film, characterized by comprising a non-volatile organic compound and the solvent composition as defined in any one of (1) to (4).
(8) A method for producing a substrate with a coating film, characterized in that the composition for forming a coating film as defined in (7) is applied to the surface of a substrate, and then the solvent composition is evaporated off to form a coating film containing the non-volatile organic compound.
(9) The method for producing a substrate with a coating film according to (8), wherein the material of at least a portion of the substrate surface to be in contact with the solvent composition is metal.
(10) An aerosol composition comprising a propellant and the solvent composition as defined in any one of (1) to (4).
(11) A heat transfer medium for a thermal cycling system containing the solvent composition as defined in any one of (1) to (4).

### ADVANTAGEOUS EFFECTS OF INVENTION

The solvent composition of the present invention has sufficient volatility, is excellent in solubility of a hydrophobic solute such as an oil, and can inhibit corrosion of metal.

The cleaning method of the present invention can inhibit corrosion of metal and is excellent in cleaning properties.

The method for producing an article with a coating film, of the present invention, can inhibit corrosion of metal and can form a uniform coating film.

The aerosol composition of the present invention can inhibit corrosion of metal and can inject the solvent composition of the present invention or a solute dissolved in the solvent composition of the present invention.

The heat transfer medium of the present invention can inhibit corrosion of metal, is excellent in solubility with lubricating oil (refrigerator oil), is excellent in cycle performance and can be used in a thermal cycling system.

### EMBODIMENTS OF INVENTION

The meanings of terms in the present invention are as follows.

1233yd has two geometric isomers, Z-body and E-body, depending on the position of the substituent on the double bond. In this specification, in a case where a compound name or abbreviation of a compound is used without specifying otherwise, it indicates at least one type selected from the group consisting of Z-body and E-body, and more specifically, indicates Z-body or E-body, or a mixture of Z-body and E-body in an optional ratio. Furthermore, (E) attached to the name of a compound with a geometric isomer and its abbreviation indicates E-body, and (Z) indicates Z-body.

### <Solvent composition>

The solvent composition of the present invention is a solvent composition comprising 1233yd as a first component, and a second component as described below, wherein the ratio of the total content of the second component to the sum of the content of 1233yd and the total content of the second component is from 0.0001 to 1.0 mass%.

In the solvent composition of the present invention, 1233yd is a component that has excellent properties as a solvent, and the second component as mentioned above is a component contained in the solvent composition as a stabilizer that stabilizes 1233yd.

The present inventors have found a new problem that at the time when 1233yd is stored at room temperature and normal pressure for several days, a small amount of 1233yd may decompose to generate chlorine ions, whereby corrosion of metal may proceed. Therefore, in the solvent composition of the present invention, the stabilization of 1233yd is attempted by letting the above-mentioned second component be contained in a specified amount together with 1233yd. The reason why 1233yd can be stabilized by letting a predetermined amount of the second component mentioned above be contained, is not necessarily clear, but it is considered that through an effect presumed to be the trapping of radicals, a function as a stabilizer that inhibits the decomposition of 1233yd and stabilizes it, is obtainable.

### (1233yd)

1233yd means 1-chloro-2,3,3-trifluoropropene (CHF₂CF=CHCl), as described above.

The content of 1233yd in the solvent composition of the present invention is preferably at least 30 mass%, more preferably at least 50 mass%, further preferably at least 80 mass%, particularly preferably at least 90 mass% to the entire mass of the solvent composition. When it is at least the above lower limit value, the solvent composition is excellent in solubility of various organic substances and is excellent in cleaning properties. As the upper limit value, at most 99.9999 mass% is preferred, and at most 99 mass% is more preferred.

1233yd has 1233yd(Z) and 1233yd(E), but 1233yd(Z) or 1233yd(E) may be used alone, or a mixture of 1233yd(Z) and 1233yd(E) may be used.

The mass ratio of 1233yd(Z) to 1233yd(E) (1233yd(Z)/1233yd(E)) is preferably from 50/50 to 100/0, more preferably from 80/20 to 100/0.

1233yd can be produced, for example, by the method described in Examples given below.

As a commercial product of 1233yd, for example, the following one may be mentioned. "AMOLEA (registered trademark) AS-300" (manufactured by AGC Inc.)

### (Second component)

The second component in the present invention will be exemplified below.

1,2,3,3-tetrachloropropene (HFO-1230xd, hereafter referred to also as 1230xd), 1,2,3-trichloro-3-fluoropropene (HCFO-1231xd, hereafter referred to also as 1231zd), 1,3,3-trichloro-2-fluoropropene (HCFO-1231yd, hereinafter referred to also as 1231yd), 1,3-dichloro-2,3-difluoropropene (HCFO-1232yd, hereinafter referred to also as 1232yd), 2-chloro-3,3-difluoropropene (HCFO-1242xf, hereinafter referred to also as 1242xf), 2,3,3-trifluoropropene (HFO-1243yf, hereafter referred to also as 1243yf), 1,3-dichloro-1,2,2-trifluoropropane (HCFC-243ca, hereafter referred to also as 243ca), 1-chloro-1,2,2,3-tetrafluoropropane (HCFC-244cb, hereafter referred to also as 244cb), 2-chloro-1,1,3,3-tetrafluoropropane (HCFC-244da, hereafter referred to also as 244da), 2-chloro-1,1,2-trifluoropropane (HCFC-253bb, hereafter referred to also as 253bb), chloroform (hereafter referred to also as CHCl₃).

### (1230xd)

1230xd is a compound soluble in 1233yd.

1230xd can be produced, for example, by mixing 1,1,2,2,3,3-hexafluoropropane obtainable by distillation and purification of a mixture of 1,1,1,2,2,3-hexafluoropropane, 1,1,1,2,3,3-hexafluoropropane and 1,1,2,2,3,3-hexafluoropropane, obtainable by reacting 1,3-dichloropropene with chlorine in a carbon tetrachloride solvent, with zinc powder in a DMF solvent, to conduct a dechlorination reaction.

### (1231xd)

1231xd is a compound soluble in 1233yd.

1231xd can be produced, for example, by mixing 1,2,3,3-tetrachloro-1-fluoropropane obtainable by reacting 1,2-dichloroethylene with dichlorofluoromethane in the presence of a zirconium chloride catalyst, with a sodium hydroxide aqueous solution in the presence of a tetrabutylammonium bromide catalyst, to conduct a dehydrogenchloride reaction.

### (1231yd)

1231yd is a compound soluble in 1233yd.

1231yd can be produced, for example, by mixing 1,1,2,3,3-pentachloro-2-fluoropropane obtainable by distillation and purification of a mixture of 1,1,1,2,3-pentachloro-2-fluoropropane and 1,1,2,3,3-pentachloro-2-fluoropropane, obtainable by reacting 1,2-dichloro-2-fluoropropane obtainable by reacting 2,3-dichloropropene with hydrogen fluoride, with chlorine in a carbon tetrachloride solvent, with zinc powder in a DMF solvent, to conduct a dechlorination reaction.

### (1232yd)

1232yd is a compound soluble in 1233yd.

1232yd can be produced, for example, by reacting 1231yd with antimony trifluoride.

### (1242xf)

1242xf is a compound soluble in 1233yd.

1242xf can be produced, for example, by distillation and purification of a mixture of 2-chloro-1,1-difluoropropene and 1242xf obtainable by mixing 2,2-dichloro-1,1-difluoropropane obtainable by chlorinating 1,1-difluoroacetone with phosphorus pentachloride, with a sodium hydroxide aqueous solution in the presence of a tetrabutylammonium bromide catalyst and conducting a dehydrogenchloride reaction.

### (1243yf)

1243yf is a compound soluble in 1233yd.

1243yf can be produced, for example, by distillation and purification of a mixture of 1,1,2-trifluoropropane and 1243yf obtainable by reducing 1233yd with hydrogen in the presence of a palladium carbon catalyst.

### (243ca)

243ca is a compound soluble in 1233yd.

243ca can be produced, for example, by reacting tosylate obtainable by reacting 3-chloro-2,2,3-trifluoropropanol with paratoluenesulfonic acid chloride, with lithium chloride in a diethylene glycol solvent.

### (244cb)

244cb is a compound soluble in 1233yd.

244cb can be produced, for example, by reacting tosylate obtainable by reacting 3-chloro-2,2,3-trifluoropropanol with paratoluenesulfonic acid chloride, with potassium fluoride in a diethylene glycol solvent.

### (244da)

244da is a compound soluble in 1233yd.

244da can be produced, for example, by chlorinating 1,1,3,3-tetrafluoro-2-propanol with thionyl chloride.

### (253bb)

253bb is a compound soluble in 1233yd.

253bb can be produced, for example, by reacting 1233yd with chlorine.

### (CHCl₃)

CHCl₃ is a compound soluble in 1233yd.

CHCl₃ can be produced, for example, by distillation and purification of a mixture of dichloromethane and CHCl₃, obtainable by reacting methane with chlorine in a gas phase.

Here, in this specification, the term "a certain substance is soluble in 1233yd" means a nature such that said substance can be uniformly dissolved without causing bilayer separation or turbidity when mixed with 1233yd at a desired concentration and stirred at room temperature (25°C).

In the solvent composition of the present invention, the stability can be evaluated, for example, by taking, as an index, the difference between the initial pH of the solvent composition and the pH after the solvent composition has been stored for a certain period of time. Here, the pH of the solvent composition in the present invention refers to the pH of the upper water layer when the solvent composition and pH 7 pure water are mixed, shaken for a predetermined time, and then allowed to stand still to separate the two layers. As the specific pH measurement conditions, the conditions described in the pH measurement section in Examples given later may be adopted.

In a case where the solvent composition of the present invention is stored for 7 days at the boiling point (about 54°C) of 1233yd, where the mass ratio of 1233yd(Z) to 1233yd(E) (1233yd(Z)/1233yd(E)) is 90/10, the decrease in the pH of the solvent composition after the storage as compared to the pH of the solvent composition before the storage, can be suppressed to be less than 1.0. That is, the generation of acid due to the decomposition of 1233yd can be suppressed. The decrease in pH due to the storage is made to be more preferably less than 0.8, further preferably less than 0.5, particularly preferably 0.0.

As the second component, olefins such as 1230xd, 1231xd, 1231yd, 1232yd, 1242xf, and 1243yf are more preferred because they are excellent in an action as stabilizers of 1233yd.

In the solvent composition of the present invention, from the viewpoint of further suppressing corrosion of metal, as the second component, a combination of 244da and CHCl₃, a combination of 1230xd and 1231xd, a combination of 1242xf and 1243yf, and a combination of 1242xf and 253bb are preferred.

The solvent composition of the present invention contains at least one of the above exemplified compounds as the second component. In the solvent composition of the present invention, the ratio of the total content of the second component to the sum of the content of 1233yd and the total content of the second component is from 0.0001 to 1.0 mass%, preferably from 0.0005 to 1.0 mass%, more preferably from 0.0005 to 0.5 mass%.

As the method for preparing the solvent composition of the present invention, commercial products of 1233yd and the second component may, respectively, be obtained and mixed in the above content ratio, or 1233yd and the second component may, respectively, be produced and mixed in the above content ratio, or 1233yd and the second component are produced by a method of producing both of them and the obtained solvent composition may be used.

1233yd can also be produced, for example, by the following procedure by using 2,2,3,3-tetrafluoropropanol (hereinafter referred to also as TFPO) as the starting material.

In the presence of N,N-dimethylformamide (hereinafter referred to also as DMF), by a chlorination reaction with thionyl chloride (SOCl₂), 3-chloro-1,1,2,2-tetrafluoropropane (HCFC-244ca, hereinafter referred to also as 244ca) can be produced. The obtained 244ca can be subjected to a dehydrogenfluoride reaction in a liquid or vapor phase in the presence of a base to produce 1233yd.

Further, 1233yd can also be produced, for example, by the following procedure by using 245ca as the starting material.

244ca can be produced by a gas phase reaction of 245ca with a Cl compound such as hydrogen chloride, carbon tetrachloride, chloroform or the like in the presence of a metal catalyst including Cr or Al oxide and a fluoride. The obtained 244ca can be subjected to a dehydrogenfluoride reaction in a liquid or vapor phase in the presence of a base to produce 1233yd.

Further, as the method for producing 1233yd, a method of subjecting 1,2-dichloro-2,3,3-trifluoropropane (HCFC-243ba, hereinafter referred to also as 243ba) to a dehydrogenchloride reaction, or a method of reacting 1,1,3,3-tetrachloro-2-fluoropropane (HCFC-241ea, hereinafter referred to also as 241ea), 1,1,2,3-tetrachloro-2-fluoropropane (HCFC-241ba, hereinafter referred to also as 241ba) or 1231yd, with hydrogen fluoride, may be mentioned.

By the above-described procedure, a solvent composition of the present invention comprising 1233yd as the first component and, as a byproduct, at least one type of the above exemplified compounds as the second component, may be produced.

The solvent composition of the present invention may contain components other than 1233yd and the second component to such an extent that the effect of the invention is not impaired. As the components other than 1233yd and the second component, trans-1,2-dichloroethylene (tDCE), nonafluorobutoxymethane, nonafluorobutoxyethane, ethanol, isopropanol, 243ba, 1,2-dichloro-3,3-difluoropropene (HCFO-1232xd, hereinafter referred to also as 1232xd), etc. may be mentioned. Among the above exemplified compounds, tDCE, nonafluorobutoxymethane, nonafluorobutoxyethane, ethanol, and isopropanol are preferred.

In a case where the solvent composition of the present invention contains tDCE as a component other than 1233yd and the second component, the ratio of the total amount of 1233yd and tDCE to the entire amount of the solvent composition is preferably at least 90 mass%, more preferably at least 95 mass%. The mass ratio of 1233yd to tDCE (1233yd/tDCE) is preferably from 28/72 to 41/59. When the total amount of 1233yd and tDCE and the mass ratio are in the above ranges, the solubility will be further excellent.

In a case where the solvent composition of the present invention contains HFE, being nonafluorobutoxymethane or nonafluorobutoxyethane, as a component other than 1233yd and the second component, the ratio of the total amount of 1233yd and HFE to the entire amount of the solvent composition is preferably at least 70 mass%, more preferably at least 90 mass%. The ratio of HFE to the total amount of 1233yd and HFE is preferably from 25 to 75 mass%. When the total amount of 1233yd and HFE, and the ratio of HFE, are in the above ranges, the solubility will be further excellent.

In a case where the solvent composition of the present invention contains an alcohol being ethanol or isopropanol as a component other than 1233yd and the second component, the ratio of the total amount of 1233yd and the alcohol to the entire amount of the solvent composition is preferably at least 80 mass%, more preferably at least 90 mass%. To 100 mass% in total of 1233yd and the alcohol, the content of 1233yd is preferably from 75 to 99 mass% and the content of the alcohol is preferably from 1 to 25 mass%, and the content of 1233yd is more preferably from 90 to 98 mass% and the content of the alcohol is more preferably from 2 to 10 mass%. When the contents of 1233yd and the alcohol are in the above ranges, the solubility will be further excellent.

For example, in a case where the solvent composition of the present invention will be in contact with copper or a copper alloy, in the solvent composition of the present invention, a nitro compound or a triazole may be contained to avoid corrosion of such a metal.

The solvent composition of the present invention is a stable solvent composition which is excellent in solubility of various organic substances, is excellent in detergency, presents no adverse effects on the global environment, and is stabilized to have decomposition controlled, and thus is preferably used for degreasing cleaning, pipe cleaning, flux cleaning, drainage cleaning, precision cleaning, and cleaning applications such as dry cleaning, stain removal, etc. of clothes. The solvent composition of the present invention can also be used in applications to be applied to the surface of an article to form a coating film, as a composition for forming a coating film by dissolving a lubricant such as a silicone lubricant or a fluorine lubricant, an anti-corrosion agent made of a mineral oil or a synthetic oil, a moisture-proof coating agent for water repellent treatment, or an anti-fouling coating agent such as an anti-fingerprint coating agent for anti-fouling treatment, etc. The solvent composition of the present invention is also suitable as a heat transfer medium for heating or cooling an article.

The articles to which the solvent composition of the present invention can be applied, can be used in a wide range of applications, including electronic parts such as capacitors, diodes, and substrates on which they are mounted; medical instruments such as injection needles and catheters; optical parts such as lenses and polarizing plates; automotive parts such as fuel injection needles used in automobile engine parts and gears of driving parts; mechanical parts such as parts of driving parts used in industrial robots and exterior parts; and cemented carbide tools used in machine tools such as cutting tools. Further, as materials to which the solvent composition of the present invention is applicable, materials in a wide range, such as metals, plastics, elastomers, glass, ceramics, fabrics, etc. may be mentioned. Among them, it is suitable for metals such as iron, copper, nickel, gold, silver, platinum, etc., sintered metals, glass, fluoropolymers, engineering plastics such as PEEK. The solvent composition of the present invention is particularly suitable for applications for cleaning and dilution coating of a metal or a composite material with a metal.

### [Cleaning method]

The cleaning method of the present invention is a method of removing stains attached to an article by bringing the article into contact with the solvent composition of the present invention.

Stains to be attached to an article may be oils and fats such as grease, processing oil, silicone oil, flux, wax, ink, mineral oil, a mold release agent including silicone oil, pitch, asphalt, etc., dust, etc. As specific examples of the processing oil, cutting oil, quenching oil, rolling oil, lubricating oil, machine oil, pressing oil, punching oil, drawing oil, assembly oil, and wire drawing oil, may be mentioned.

The solvent composition of the present invention has a high cleaning power and thus is particularly suitable for cleaning processing oil, pitch and asphalt.

As specific examples of the cleaning method of the present invention, hand wiping, immersion cleaning, spray cleaning, immersion oscillating cleaning, immersion ultrasonic cleaning, steam cleaning, and a combination of these methods, may be mentioned. For example, spray cleaning may be conducted in the form of an aerosol containing the solvent composition of the present invention and a liquefied or compressed gas. The cleaning conditions such as the contact time, temperature, etc. in such cleaning methods can be optionally selected depending upon the cleaning methods. Also, the cleaning equipment can be optionally selected from the publicly known equipment.

The cleaning method of the present invention can be carried out by using, for example, the method and cleaning equipment described in WO2008/149907.

### [Composition for forming coating film, method for producing article with coating film]

In the method for producing an article with a coating film of the present invention, a composition for forming a coating film comprising the solvent composition of the present invention and a non-volatile organic compound, is applied to the surface of an article, and then the above solvent composition is evaporated to form a coating film containing the non-volatile organic compound on the surface of the article.

As the coating method of the composition for forming a coating film, for example, coating by brushing, coating by spraying, or coating by dipping may be mentioned. In a case where the article is a tube or a syringe needle, the composition for forming a coating film may be applied to the inner wall by sucking up the composition for forming a coating film. Otherwise, spray coating may be conducted in the form of an aerosol containing the solvent composition of the present invention, a non-volatile organic compound, and a liquefied or compressed gas.

As the evaporation method of the solvent composition, for example, air drying or drying by heating may be mentioned. The drying temperature is preferably from 20 to 100°C.

The non-volatile organic compound in the present invention is one, of which the boiling point is higher than that of the solvent composition of the present invention and the organic compound will remain on the surface after the solvent composition has been evaporated. As the non-volatile organic compound, specifically a lubricant for imparting lubricity to an article, a rust inhibitor for imparting rust inhibiting effects on a metal part, a moisture-proof coating agent for imparting water repellency to an article, or an anti-fouling coating agent such as an anti-fingerprinting agent for imparting anti-fouling performance to an article, may be mentioned. The solvent composition of the present invention is suitable for such an application, because it is excellent in solubility of an organic compound.

The method for preparing the composition for forming a coating film is not particularly restricted so long as it is a method whereby the non-volatile organic compound can be uniformly dissolved in the solvent composition.

The content of the non-volatile organic compound is preferably from 0.01 to 50 mass%, more preferably from 0.05 to 30 mass%, further preferably from 0.1 to 20 mass%, to the entire amount of the composition for forming a coating film. When the content of the non-volatile organic compound is within the above range, it will be easy to adjust the thickness of the coating film to a proper range when the composition for forming a coating film is applied.

### [Aerosol composition]

The solvent composition of the present invention can be used as an aerosol composition by mixing it with a propellant. As an alternative, the solvent composition of the present invention can also be used as an aerosol composition comprising the solvent composition, a propellant, and a solute dissolved in the solvent composition. As the propellant, a liquefied gas and a compressed gas may be mentioned. As the liquefied gas in the aerosol composition, dimethyl ether (DME), liquefied petroleum gas (LPG), propane, butane, isobutane, 1,1-difluoroethane (HFC-152a), 1,1,1,2-tetrafluoroethane (HFC-134a), 2,3,3,3-tetrafluoropropene (HFO-1234yf), 1,3,3,3-tetrafluoropropene (HFO-1234ze), etc. may be mentioned. On the other hand, as the compressed gas, nitrogen, carbon dioxide, nitrous oxide, etc. may be mentioned. The solute dissolved in the solvent composition can be anything that can be applied to the surface of the substrate, such as a lubricant, a dye, an adhesive, etc. The content of the solute is preferably from 0.1 to 10 mass%, more preferably from 0.1 to 5 mass%, further preferably from 0.1 to 1 mass%, to 100 mass% in total of the solvent composition and the solute.

### [Heat transfer medium]

The solvent composition of the present invention is excellent in solubility with lubricating oil (refrigerator oil) and excellent in cycle performance, and thus can be suitably used as a heat transfer medium for a thermal cycling system.

As the thermal cycling system, a Rankine cycle system, a heat pump cycle system, a refrigeration cycle system, a heat transport system, a secondary refrigerant cooling system, etc. may be mentioned. Specifically, refrigeration equipment, air conditioning equipment, power generation systems, heat transport systems, and secondary refrigerant cooling systems may be mentioned.

In the following, as an example of the thermal cycling system, a refrigeration cycle system will be described.

A refrigeration cycle system is a system that cools a load fluid to a lower temperature by removing thermal energy from the load fluid by a heat transfer medium in an evaporator. The refrigeration cycle system is a system constituted by a compressor that compresses the vapor of the heat transfer medium to make a high temperature, high pressure heat transfer medium vapor, a condenser that cools the vapor of the compressed heat transfer medium to make a low temperature, high pressure heat transfer medium liquid, an expansion valve that expands the heat transfer medium liquid discharged from the condenser to make a low temperature, low pressure heat transfer medium liquid, an evaporator that heats the heat transfer medium discharged from the expansion valve to make a vapor of a low-temperature, low-pressure heat transfer medium, a pump that supplies a load fluid to the evaporator, and a pump that supplies the load fluid to the condenser.

Further, the solvent composition of the present invention can be used as a heat transfer medium (referred to also as a secondary refrigerant) for a secondary circulation cooling system.

The secondary circulation cooling system is a system having a primary cooling means to cool the primary refrigerant consisting of ammonia or a hydrocarbon refrigerant, a secondary circulation cooling means to circulate the secondary refrigerant for the secondary circulation cooling system to cool an object to be cooled, and a heat exchanger to cool the secondary refrigerant by heat exchange between the primary refrigerant and the secondary refrigerant. By this secondary circulation cooling system, it is possible to cool the object to be cooled.

### EXAMPLES

In the following, the present invention will be described in detail with reference to Examples. The present invention is not limited to these Examples. Ex. 2 to 6, 10 to14, 18 to 22, 26 to 30, 34 to 38, 42 to 46, 50 to 54, 58 to 62, 66 to 70, 74 to 78, 82 to 86, 90 to 94, 98 to 102, 106 to 110, 114 to 118, 122 to 126, 130 to 134, 138 to142, 146 to 150, 154 to 158, 162 to 166, 170 to 174 are Examples for the solvent composition of the present invention, and Ex. 1, 7 to 9, 15 to 17, 23 to 25, 31 to 33, 39 to 41, 47 to 49, 55 to 57, 63 to 65, 71 to 73, 79 to 81, 87 to 89, 95 to 97, 103 to 105, 111 to 113, 119 to 121, 127 to 129, 135 to 137, 143 to 145, 151 to 153, 159 to 161, 167 to169, 175, and 176 are Comparative Examples.

### (Production Example: Production of 244ca)

To a 2-liter four-mouth flask equipped with a stirrer, a Dimroth condenser and a glass distillation column (5 measured stages) filled with Raschig rings, 1204 g (9.12 mol) of 2,2,3,3-tetrafluoropropanol (TFPO) and 12 g (0.17 mol) of N,N-dimethylformamide (DMF) were added. 1078 g (9.12 mol) of thionyl chloride was dropwise added, followed by stirring at room temperature for 12 hours. The reactor was heated to 100°C, and reaction distillation was carried out by adjusting the reflux time/distillation time ratio to be 5/1 by a reflux timer. The distilled 244ca was neutralized with a 20 mass% potassium hydroxide aqueous solution. The recovered 244ca (100% purity) was 979 g (6.50 mol).

### (Production Example: Production of 1233yd)

Using 2000 g of 244ca as the raw material, 19.9 g of tetra-n-butylammonium chloride was added, the reaction temperature was maintained at 50°C, and 2792 g of a 40 mass% potassium hydroxide aqueous solution was dropwise added over 30 minutes. Then, the reaction was continued for 52 hours, and the organic layer was recovered. The recovered organic layer was purified to obtain 1660 g of 1233yd with 100 mass% purity. This test was repeated to produce the required amount of 1233yd. Here, the mass ratio of 1233yd(Z) to 1233yd(E) in the obtained 1233yd (1233yd(Z)/1233yd(E)) was 90/10.

### (Ex. 2 to 6, 10 to 14, 18 to 22, 26 to 30, 34 to 38, 42 to 46, 50 to 54, 58 to 62, 66 to 70, 74 to 78, 82 to 86: Production of solvent composition (Examples of the present invention)

The 1233yd obtained above and, as the second component, one of 1230xd, 1231xd, 1231yd, 1232yd, 1242xf, 1243yf, 243ca, 244cb, 244da, 253bb, and CHCl₃, were added so as to be the content ratio shown in Table 1-1 or Table 1-2 to prepare 500 g each of solvent compositions in Ex. 2 to 6, 10 to 14, 18 to 22, 26 to 30, 34 to 38, 42 to 46, 50 to 54, 58 to 62, 66 to 70, 74 to 78, and 82 to 86 containing 1233yd and the second component.

The solvent compositions in Ex. 2 to 6 are solvent compositions containing 1233yd and, as a second component, 1230xd. The solvent compositions in Ex. 10 to 14 are solvent compositions containing 1233yd and, as a second component, 1231xd. The solvent compositions in Ex. 18 to 22 are solvent compositions containing 1233yd and, as the second component, 1231yd. The solvent compositions in Ex. 26 to 30 are solvent compositions containing 1233 yd and, as a second component, 1232 yd. The solvent compositions in Ex. 34 to 38 are solvent compositions containing 1233yd and, as a second component, 1242xf. The solvent compositions in Ex. 42 to 46 are solvent compositions containing 1233yd and, as a second component, 1243yf. The solvent compositions in Ex. 50 to 54 are solvent compositions containing 1233yd and, as a second component, 243ca. The solvent compositions in Ex. 58 to 62 are solvent compositions containing 1233yd and, as a second component, 244cb. The solvent compositions in Ex. 66 to 70 are solvent compositions containing 1233yd and, as the second component, 244da. The solvent compositions in Ex. 74 to 78 are solvent compositions containing 1233yd and, as a second component, 253bb. The solvent compositions in Ex. 82 to 86 are solvent compositions containing 1233yd and, as a second component, CHCl₃.

### (Ex. 1, 7, 9, 15, 17, 23, 25, 31, 33, 39, 41, 47, 49, 55, 57, 63, 65, 71, 73, 79, 81, 87: Production of solvent composition (Comparative Examples)

The 1233yd obtained above and, as the second component, one of 1230xd, 1231xd, 1231yd, 1232yd, 1242xf, 1243yf, 243ca, 244cb, 244da, 253bb and CHCl₃, were added to be the content ratio shown in Table 1-1 or Table 1-2, to prepare 500 g each of the solvent compositions in Ex. 1, 7, 9, 15, 17, 23, 25, 31, 33, 39, 41, 47, 49, 55, 57, 63, 65, 71, 73, 79, 81 and 87 containing 1233yd and the second component.

The solvent compositions in Ex. 1 and 7 are solvent compositions containing 1233yd and, as a second component, 1230xd. The solvent compositions in Ex. 9 and 15 are solvent compositions containing 1233yd and, as a second component, 1231xd. The solvent compositions in Ex. 17 and 23 are solvent compositions containing 1233yd and, as a second component, 1231yd. The solvent compositions in Ex. 25 and 31 are solvent compositions containing 1233yd and, as a second component, 1232yd. The solvent compositions in Ex. 33 and 39 are solvent compositions containing 1233yd and, as a second component, 1242xf. The solvent compositions in Ex. 41 and 47 are solvent compositions containing 1233yd and, as a second component, 1243yf. The solvent compositions in Ex. 49 and 55 are solvent compositions containing 1233yd and, as a second component, 243ca. The solvent composition in Ex. 57 and 63 are solvent compositions containing 1233yd and, as a second component, 244cb. The solvent compositions in Ex. 65 and 71 are solvent compositions containing 1233yd and, as a second component, 244da. The solvent compositions in Ex. 73 and 79 are solvent compositions containing 1233yd and, as a second component, 253bb. The solvent compositions in Ex. 81 and 87 are solvent compositions containing 1233yd and, as a second component, CHCl₃.

### (Ex. 8, 16, 24, 32, 40, 48, 55, 64, 72, 80, 88: Production of solvent composition

### (Comparative Examples)

Using the 1233yd obtained above, 500 g each of the solvent compositions in Ex.8, 16, 24, 32, 40, 48, 55, 64, 72, 80 and 88, consisting only of 1233yd, was produced.

### (Ex. 90 to 94, 98 to 102, 106 to 110, 114 to 118, 122 to 126, 130 to 134, 138 to 142, 146 to 150, 154 to 158, 162 to 166, 170 to 174: Production of solvent composition

### (Examples of the present invention)

The 1233yd obtained above, as a second component, one of 1230xd, 1231xd, 1231yd, 1232yd, 1242xf, 1243yf, 243ca, 244cb, 244da, 253bb and CHCl₃, and, as a third component, tDCE, were added so as to be the content ratio as shown in Table 2-1 or Table 2-2, to prepare 500 g each of the solvent compositions in Ex. 90 to 94, 98 to 102, 106 to 110, 114 to 118, 122 to 126, 130 to 134, 138 to 142, 146 to 150, 154 to 158, 162 to 166, and 170 to 174 containing 1233yd, the second component and the third component.

The solvent compositions in Ex. 90 to 94 are solvent compositions containing 1233yd, as the second component, 1230xd, and as the third component, tDCE. The solvent compositions in Ex. 98 to 102 are solvent compositions containing 1233yd, as the second component, 1231xd, and, as the third component, tDCE. The solvent compositions in Ex. 106 to 110 are solvent compositions containing 1233yd, as the second component, 1231yd, and, as the third component, tDCE. The solvent compositions in Ex. 114 to 118 are solvent compositions containing 1233yd, as the second component, 1232yd, and, as the third component, tDCE. The solvent compositions in Ex. 122 to126 are solvent compositions containing 1233yd, as the second component, 1242xf, and, as the third component, tDCE. The solvent compositions in Ex. 130 to 134 are solvent compositions containing 1233yd, as the second component, 1243yf, and, as the third component, tDCE. The solvent compositions in Ex. 138 to 142 are solvent compositions containing 1233yd, as the second component, 243ca, and, as the third component, tDCE. The solvent compositions in Ex. 146 to 150 are solvent compositions containing 1233yd, as the second component, 244cb, and, as the third component, tDCE. The solvent compositions in Ex. 154 to 158 are solvent compositions containing 1233yd, as the second component, 244da, and, as the third component, tDCE. The solvent compositions in Ex. 162 to 166 are solvent compositions containing 1233yd, as the second component, 253bb, and, as the third component, tDCE. The solvent compositions in Ex. 170 to 174 are solvent compositions containing 1233yd, as the second component, CHCl₃, and, as the third component, tDCE.

### (Ex. 89, 95, 97, 103, 105, 111, 113, 119, 121, 127, 129, 135, 137, 143, 145, 151, 153, 159, 161, 169, 175: Production of solvent composition (Comparative Examples)

The 1233yd obtained above, as a second component, one of 1230xd, 1231xd, 1231yd, 1232yd, 1242xf, 1243yf, 243ca, 244cb, 244da, 253bb and CHCl₃, and, as a third component, tDCE, were added so as to be the content ratio as shown in Table 2-1 or Table 2-2, to prepare 500 g each of the solvent compositions in Ex. 89, 95, 97, 103, 105, 111, 113, 119, 121, 127, 129, 135, 137, 143, 145, 151, 153, 159, 161, 169 and 175 containing 1233yd, the second component and the third component.

The solvent compositions in Ex. 89 and 95 are solvent compositions containing 1233yd, as the second component, 1230xd, and, as the third component, tDCE. The solvent compositions in Ex. 97 and 103 are solvent compositions containing 1233yd, as the second component, 1231xd, and, as the third component, tDCE. The solvent compositions in Ex. 105 and 111 are solvent compositions containing 1233yd, as the second component, 1231yd, and, as the third component, tDCE. The solvent compositions in Ex. 113 and 119 are solvent compositions containing 1233yd, as the second component, 1232yd, and, as the third component, tDCE. The solvent compositions in Ex. 121 and 127 are solvent compositions containing 1233yd, as the second component, 1242xf, and, as the third component, tDCE. The solvent compositions in Ex. 129 and 135 are solvent compositions containing 1233yd, as the second component, 1243yf, and, as the third component, tDCE. The solvent compositions in Ex. 137 and 143 are solvent compositions containing 1233yd, as the second component, 243ca, and, as the third component, tDCE. The solvent compositions in Ex. 145 and 151 are solvent compositions containing 1233yd, as the second component, 244cb, and, as the third component, tDCE. The solvent compositions in Ex. 153 and 159 are solvent compositions containing 1233yd, as the second component, 244da, and, as the third component, tDCE. The solvent compositions in Ex. 161 and 167 are solvent compositions containing 1233yd, as the second component, 253bb, and, as the third component, tDCE. The solvent compositions in Ex. 169 and 175 are solvent compositions containing 1233yd, as the second component, CHCl₃, and, as the third component, tDCE.

### (Ex. 96, 104, 112, 120, 128, 136, 144, 152, 160, 168, 176: Production of solvent composition (Comparative Examples)

Using the 1233yd obtained above, 500 g each of the solvent compositions in Ex. 96, 104, 112, 120, 128, 136, 144, 152, 160, 168 and 176 consisting of 1233yd and tDCE was produced.

### [Analyses]

### Analyses of solvent compositions

In the production of various solvent compositions, compositional analyses of the obtained solvent compositions were conducted by using gas chromatography (GC). The instrument was Agilent 7890A (manufactured by Agilent Technologies, Inc.), the detector was FID, the column was DB-1301 (length 60 m × inner diameter 250 µm × thickness 1 µm, manufactured by Agilent Technologies, Inc.), and helium was used as the carrier gas. The measurements were conducted under the measuring conditions of 30°C → 10 min holding → temperature increase at 10°C/min → 240°C.

### [Evaluations]

### Stability testing and metal corrosion resistance testing

100 g of one of the solvent compositions in Ex. 1 to 176 was put in a heat-resistant glass bottle containing a specimen of cold-rolled steel sheet for general use (SPCC) and stored for 7 days. The measurement results of the pH of the solvent composition immediately after the preparation (before the test) and after the storage for 7 days (after the test), and the evaluation results in observation of the appearance of the SPCC surface after the storage for 7 days (after the test), are shown in Table 1-1, Table 1-2, Table 2-1 and Table 2-2.

### (pH measurement method)

40 g of one of the solvent compositions in Ex. 1 to 176 and 40 g of pure water adjusted to pH 7 were put in a 200-mL volumetric separatory funnel and shaken for 1 minute. Then, it was allowed to stand still to separate two layers, and the upper water layer was separated. The pH of the water layer was measured by a pH meter (Model number: HM-30R, manufactured by DKK-Toa Corporation).

### (Evaluation method in observation of appearance of SPCC surface)

Changes in the metal surface before and after the test were visually evaluated using an untested specimen of each metal for comparison. The evaluation standards are as follows.

"S (Excellent)": No change before and after the test.
"A (Good)": Gloss was lost after the test as compared to before the test, but this is not a problem in practical use.
"B (Slightly poor)": The surface is slightly rusted after the test.
"X (Poor)": Rusting is observed on the entire surface after the test.

**[Table 1-1]**

| Ex. | 1233yd | Second component | mass% | pH | | | Appearance after the metal corrosion resistance test |
|---|---|---|---|---|---|---|---|
| | Ratio (mass%) of content of each component to the sum of content of 1233yd and content of second component | | | Before the test | After the test | Difference in pH before and after the test | |
| 1 | 99.99995 | 1230xd | 0.00005 | 7.0 | 6.0 | 1.0 | B |
| 2 | 99.9999 | 1230xd | 0.0001 | 7.0 | 6.5 | 0.5 | A |
| 3 | 99.9995 | 1230xd | 0.0005 | 7.0 | 7.0 | 0.0 | S |
| 4 | 99.99 | 1230xd | 0.01 | 7.0 | 7.0 | 0.0 | S |
| 5 | 99.9 | 1230xd | 0.1 | 7.0 | 7.0 | 0.0 | S |
| 6 | 99 | 1230xd | 1 | 7.0 | 7.0 | 0.0 | S |
| 7 | 98.5 | 1230xd | 1.5 | 7.0 | 6.0 | 1.0 | B |
| 8 | 100 | 1230xd | - | 7.0 | 4.6 | 2.4 | × |
| 9 | 99.99995 | 1231xd | 0.00005 | 7.0 | 6.0 | 1.0 | B |
| 10 | 99.9999 | 1231xd | 0.0001 | 7.0 | 6.5 | 0.5 | A |
| 11 | 99.9995 | 1231xd | 0.0005 | 7.0 | 7.0 | 0.0 | S |
| 12 | 99.99 | 1231xd | 0.01 | 7.0 | 7.0 | 0.0 | S |
| 13 | 99.9 | 1231xd | 0.1 | 7.0 | 7.0 | 0.0 | S |
| 14 | 99 | 1231xd | 1 | 7.0 | 7.0 | 0.0 | S |
| 15 | 98.5 | 1231xd | 1.5 | 7.0 | 6.0 | 1.0 | B |
| 16 | 100 | 1231xd | - | 7.0 | 4.6 | 2.4 | × |
| 17 | 99.99995 | 1231yd | 0.00005 | 7.0 | 6.0 | 1.0 | B |
| 18 | 99.9999 | 1231yd | 0.0001 | 7.0 | 6.5 | 0.5 | A |
| 19 | 99.9995 | 1231yd | 0.0005 | 7.0 | 7.0 | 0.0 | S |
| 20 | 99.99 | 1231yd | 0.01 | 7.0 | 7.0 | 0.0 | S |
| 21 | 99.9 | 1231yd | 0.1 | 7.0 | 7.0 | 0.0 | S |
| 22 | 99 | 1231yd | 1 | 7.0 | 7.0 | 0.0 | S |
| 23 | 98.5 | 1231yd | 1.5 | 7.0 | 6.0 | 1.0 | B |
| 24 | 100 | 1231yd | - | 7.0 | 4.6 | 2.4 | × |
| 25 | 99.99995 | 1232yd | 0.00005 | 7.0 | 6.0 | 1.0 | B |
| 26 | 99.9999 | 1232yd | 0.0001 | 7.0 | 6.5 | 0.5 | A |
| 27 | 99.9995 | 1232yd | 0.0005 | 7.0 | 7.0 | 0.0 | S |
| 28 | 99.99 | 1232yd | 0.01 | 7.0 | 7.0 | 0.0 | S |
| 29 | 99.9 | 1232yd | 0.1 | 7.0 | 7.0 | 0.0 | S |
| 30 | 99 | 1232yd | 1 | 7.0 | 7.0 | 0.0 | S |
| 31 | 98.5 | 1232yd | 1.5 | 7.0 | 6.0 | 1.0 | B |
| 32 | 100 | 1232yd | - | 7.0 | 4.6 | 2.4 | × |
| 33 | 99.99995 | 1242xf | 0.00005 | 7.0 | 6.0 | 1.0 | B |
| 34 | 99.9999 | 1242xf | 0.0001 | 7.0 | 6.5 | 0.5 | A |
| 35 | 99.9995 | 1242xf | 0.0005 | 7.0 | 7.0 | 0.0 | S |
| 36 | 99.99 | 1242xf | 0.01 | 7.0 | 7.0 | 0.0 | S |
| 37 | 99.9 | 1242xf | 0.1 | 7.0 | 7.0 | 0.0 | S |
| 38 | 99 | 1242xf | 1 | 7.0 | 7.0 | 0.0 | S |
| 39 | 98.5 | 1242xf | 1.5 | 7.0 | 6.0 | 1.0 | B |
| 40 | 100 | 1242xf | - | 7.0 | 4.6 | 2.4 | × |
| 41 | 99.99995 | 1243yf | 0.00005 | 7.0 | 6.0 | 1.0 | B |
| 42 | 99.9999 | 1243yf | 0.0001 | 7.0 | 6.5 | 0.5 | A |
| 43 | 99.9995 | 1243yf | 0.0005 | 7.0 | 7.0 | 0.0 | S |
| 44 | 99.99 | 1243yf | 0.01 | 7.0 | 7.0 | 0.0 | S |
| 45 | 99.9 | 1243yf | 0.1 | 7.0 | 7.0 | 0.0 | S |
| 46 | 99 | 1243yf | 1 | 7.0 | 7.0 | 0.0 | S |
| 47 | 98.5 | 1243yf | 1.5 | 7.0 | 6.0 | 1.0 | B |
| 48 | 100 | 1243yf | - | 7.0 | 4.6 | 2.4 | × |

**[Table 1-2]**

| Ex. | 1233yd | Second component | mass% | pH | | | Appearance after the metal corrosion resistance test |
|---|---|---|---|---|---|---|---|
| | Ratio (mass%) of content of each component to the sum of content of 1233yd and content of second component | | | Before the test | After the test | Difference in pH before and after the test | |
| 49 | 99.99995 | 243ca | 0.00005 | 7.0 | 6.0 | 1.0 | B |
| 50 | 99.9999 | 243ca | 0.0001 | 7.0 | 6.3 | 0.7 | A |
| 51 | 99.9995 | 243ca | 0.0005 | 7.0 | 7.0 | 0.0 | S |
| 52 | 99.99 | 243ca | 0.01 | 7.0 | 7.0 | 0.0 | S |
| 53 | 99.9 | 243ca | 0.1 | 7.0 | 7.0 | 0.0 | S |
| 54 | 99 | 243ca | 1 | 7.0 | 7.0 | 0.0 | S |
| 55 | 98.5 | 243ca | 1.5 | 7.0 | 6.0 | 1.0 | B |
| 56 | 100 | 243ca | - | 7.0 | 4.6 | 2.4 | × |
| 57 | 99.99995 | 244cb | 0.00005 | 7.0 | 6.0 | 1.0 | B |
| 58 | 99.9999 | 244cb | 0.0001 | 7.0 | 6.3 | 0.7 | A |
| 59 | 99.9995 | 244cb | 0.0005 | 7.0 | 7.0 | 0.0 | S |
| 60 | 99.99 | 244cb | 0.01 | 7.0 | 7.0 | 0.0 | S |
| 61 | 99.9 | 244cb | 0.1 | 7.0 | 7.0 | 0.0 | S |
| 62 | 99 | 244cb | 1 | 7.0 | 7.0 | 0.0 | S |
| 63 | 98.5 | 244cb | 1.5 | 7.0 | 6.0 | 1.0 | B |
| 64 | 100 | 244cb | - | 7.0 | 4.6 | 2.4 | × |
| 65 | 99.99995 | 244da | 0.00005 | 7.0 | 6.0 | 1.0 | B |
| 66 | 99.9999 | 244da | 0.0001 | 7.0 | 6.3 | 0.7 | A |
| 67 | 99.9995 | 244da | 0.0005 | 7.0 | 7.0 | 0.0 | S |
| 68 | 99.99 | 244da | 0.01 | 7.0 | 7.0 | 0.0 | S |
| 69 | 99.9 | 244da | 0.1 | 7.0 | 7.0 | 0.0 | S |
| 70 | 99 | 244da | 1 | 7.0 | 7.0 | 0.0 | S |
| 71 | 98.5 | 244da | 1.5 | 7.0 | 6.0 | 1.0 | B |
| 72 | 100 | 244da | - | 7.0 | 4.6 | 2.4 | × |
| 73 | 99.99995 | 253bb | 0.00005 | 7.0 | 6.0 | 1.0 | B |
| 74 | 99.9999 | 253bb | 0.0001 | 7.0 | 6.3 | 0.7 | A |
| 75 | 99.9995 | 253bb | 0.0005 | 7.0 | 7.0 | 0.0 | S |
| 76 | 99.99 | 253bb | 0.01 | 7.0 | 7.0 | 0.0 | S |
| 77 | 99.9 | 253bb | 0.1 | 7.0 | 7.0 | 0.0 | S |
| 78 | 99 | 253bb | 1 | 7.0 | 7.0 | 0.0 | S |
| 79 | 98.5 | 253bb | 1.5 | 7.0 | 6.0 | 1.0 | B |
| 80 | 100 | 253bb | - | 7.0 | 4.6 | 2.4 | × |
| 81 | 99.99995 | CHCl3 | 0.00005 | 7.0 | 6.0 | 1.0 | B |
| 82 | 99.9999 | CHCl3 | 0.0001 | 7.0 | 6.3 | 0.7 | A |
| 83 | 99.9995 | CHCl3 | 0.0005 | 7.0 | 7.0 | 0.0 | S |
| 84 | 99.99 | CHCl3 | 0.01 | 7.0 | 7.0 | 0.0 | S |
| 85 | 99.9 | CHCl3 | 0.1 | 7.0 | 7.0 | 0.0 | S |
| 86 | 99 | CHCl3 | 1 | 7.0 | 7.0 | 0.0 | S |
| 87 | 98.5 | CHCl3 | 1.5 | 7.0 | 6.0 | 1.0 | B |
| 88 | 100 | CHCl3 | - | 7.0 | 4.6 | 2.4 | × |

**[Table 2-1]**

| 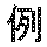 | 1233yd | Second component | mass%. | Third component | mass% | | pH | | | Appearance after the metal corrosion resistance test |
|---|---|---|---|---|---|---|---|---|---|---|
| | Ratio (mass%) of content of each component to the sum of content of 1233yd, content of second component and content of third component | | | | | Ratio (mass%) of content of second component to the sum of content of 1233yd and content of second component | Before the test | After the test | Difference in pH before and after the test | |
| 89 | 34.9999825 | 1230xd | 0.0000175 | tDCE | 65 | 0.00005 | 7.0 | 6.0 | 1.0 | B |
| 90 | 34999965 | 1230xd | 0.000035 | tDCE | 65 | 0.0001 | 7.0 | 6.5 | 0.5 | A |
| 91 | 34.999825 | 1230xd | 0.000175 | tDCE | 65 | 0.0005 | 7.0 | 7.0 | 0.0 | S |
| 92 | 34.9965 | 1230xd | 0.0035 | tDCE | 65 | 0.01 | 7.0 | 7.0 | 0.0 | S |
| 93 | 34.965 | 1230xd | 0.035 | tDCE | 65 | 0.1 | 7.0 | 7.0 | 0.0 | S |
| 94 | 34.65 | 1230xd | 0.35 | tDCE | 65 | 1 | 7.0 | 7.0 | 0.0 | S |
| 95 | 34.475 | 1230xd | 0.525 | tDCE | 65 | 1.5 | 7.0 | 6.0 | 1.0 | B |
| 96 | 34.5 | 1230xd | - | tDCE | 65 | - | 7.0 | 4.6 | 2.4 | × |
| 97 | 349999825 | 1231xd | 0.0000175 | tDCE | 65 | 0.00005 | 7.0 | 6.0 | 1.0 | B |
| 98 | 34.999965 | 1231xd | 0.000035 | tDCE | 65 | 0.0001 | 7.0 | 6.5 | 0.5 | A |
| 99 | 34.999825 | 1231xd | 0.000175 | tDCE | 65 | 0.0005 | 7.0 | 7.0 | 0.0 | S |
| 100 | 34.9965 | 1231xd | 0.0035 | tDCE | 65 | 0.01 | 7.0 | 7.0 | 0.0 | S |
| 101 | 34.965 | 1231xd | 0.035 | tDCE | 65 | 0.1 | 7.0 | 7.0 | 0.0 | S |
| 102 | 34.65 | 1231xd | 0.35 | tDCE | 65 | 1 | 7.0 | 7.0 | 0.0 | S |
| 103 | 34.475 | 1231xd | 0.525 | tDCE | 65 | 1.5 | 7.0 | 6.0 | 1.0 | B |
| 104 | 34.5 | 1231xd | - | tDCE | 65 | - | 7.0 | 4.6 | 2.4 | × |
| 105 | 34.9999825 | 1231yd | 0.0000175 | tDCE | 65 | 0.00005 | 7.0 | 6.0 | 1.0 | B |
| 106 | 34.999965 | 1231yd | 0.000035 | tDCE | 65 | 0.0001 | 7.0 | 6.5 | 0.5 | A |
| 107 | 34.999825 | 1231yd | 0.000175 | tDCE | 65 | 0.0005 | 7.0 | 7.0 | 0.0 | S |
| 108 | 34.9965 | 1231yd | 0.0035 | tDCE | 65 | 0.01 | 7.0 | 7.0 | 0.0 | S |
| 109 | 34.965 | 1231yd | 0.035 | tDCE | 65 | 0.1 | 7.0 | 7.0 | 0.0 | S |
| 110 | 34.65 | 1231yd | 0.35 | tDCE | 65 | 1 | 7.0 | 7.0 | 0.0 | S |
| 111 | 34.475 | 1231yd | 0.525 | tDCE | 65 | 1.5 | 7.0 | 6.0 | 1.0 | B |
| 112 | 34.5 | 1231yd | - | tDCE | 65 | - | 7.0 | 4.6 | 2.4 | × |
| 113 | 34.9999825 | 1232yd | 0.0000175 | tDCE | 65 | 0.00005 | 7.0 | 6.0 | 1.0 | B |
| 114 | 34.999965 | 1232yd | 0.000035 | tDCE | 65 | 0.0001 | 7.0 | 6.5 | 0.5 | A |
| 115 | 34.999825 | 1232yd | 0.000175 | tDCE | 65 | 0.0005 | 7.0 | 7.0 | 0.0 | S |
| 116 | 34.9965 | 1232yd | 0.0035 | tDCE | 65 | 0.01 | 7.0 | 7.0 | 0.0 | S |
| 117 | 34.965 | 1232yd | 0.035 | tDCE | 65 | 0.1 | 7.0 | 7.0 | 0.0 | S |
| 118 | 34.65 | 1232yd | 0.35 | tDCE | 65 | 1 | 7.0 | 7.0 | 0.0 | S |
| 119 | 34.475 | 1232yd | 0.525 | tDCE | 65 | 1.5 | 7.0 | 6.0 | 1.0 | B |
| 120 | 34.5 | 1232yd | - | tDCE | 65 | - | 7.0 | 4.6 | 2.4 | × |
| 121 | 34.9999825 | 1242xf | 0.0000175 | tDCE | 65 | 0.00005 | 7.0 | 6.0 | 1.0 | B |
| 122 | 34.999965 | 1242xf | 0.000035 | tDCE | 65 | 0.0001 | 7.0 | 6.5 | 0.5 | A |
| 123 | 34.999825 | 1242xf | 0.000175 | tDCE | 65 | 0.0005 | 7.0 | 7.0 | 0.0 | S |
| 124 | 34.9965 | 1242xf | 0.0035 | tDCE | 65 | 0.01 | 7.0 | 7.0 | 0.0 | S |
| 125 | 34.965 | 1242xf | 0.035 | tDCE | 65 | 0.1 | 7.0 | 7.0 | 0.0 | S |
| 126 | 34.65 | 1242xf | 0.35 | tDCE | 65 | 1 | 7.0 | 7.0 | 0.0 | S |
| 127 | 34.475 | 1242xf | 0.525 | tDCE | 65 | 1.5 | 7.0 | 6.0 | 1.0 | B |
| 128 | 34.5 | 1242xf | - | tDCE | 65 | - | 7.0 | 4.6 | 2.4 | × |
| 129 | 34.9999825 | 1243yf | 0.0000175 | tDCE | 65 | 0.00005 | 7.0 | 6.0 | 1.0 | B |
| 130 | 34.999965 | 1243yf | 0.000035 | tDCE | 65 | 0.0001 | 7.0 | 6.5 | 0.5 | A |
| 131 | 34.999825 | 1243yf | 0.000175 | tDCE | 65 | 0.0005 | 7.0 | 7.0 | 0.0 | S |
| 132 | 34.9965 | 1243yf | 0.0035 | tDCE | 65 | 0.01 | 7.0 | 7.0 | 0.0 | S |
| 133 | 34.965 | 1243yf | 0.035 | tDCE | 65 | 0.1 | 7.0 | 7.0 | 0.0 | S |
| 134 | 34.65 | 1243yf | 0.35 | tDCE | 65 | 1 | 7.0 | 7.0 | 0.0 | S |
| 135 | 34.475 | 1243yf | 0.525 | tDCE | 65 | 1.5 | 7.0 | 6.0 | 1.0 | B |
| 136 | 34.5 | 1243yf | - | tDCE | 65 | - | 7.0 | 4.6 | 2.4 | × |

**[Table 2-2]**

| 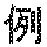 | 1233yd | Second component | mass% | Third component | mass% | | pH | | | Appearance after the metal corrosion resistance test |
|---|---|---|---|---|---|---|---|---|---|---|
| | Ratio (mass%) of content of each component to the sum of content of 1233yd, content of second component and content of third component | | | | | Ratio (mass%) of content of second component to the sum of content of 1233yd and content of second component | Before the test | After the test | Difference in pH before and after the test | |
| 137 | 34.9999825 | 243ca 0.0000175 | | tDCE 65 | | 0.00005 | 7.0 | 6.0 | 1.0 | B |
| 138 | 34.999965 | 243ca | 0.000035 | tDCE | 65 | 0.0001 | 7.0 | 6.3 | 0.7 | A |
| 139 | 34999825 | 243ca | 0.000175 | tDCE | 65 | 0.0005 | 7.0 | 7.0 | 0.0 | S |
| 140 | 349965 | 243ca | 0.0035 | tDCE | 65 | 0.01 | 7.0 | 7.0 | 0.0 | S |
| 141 | 34.965 | 243ca | 0.035 | tDCE | 65 | 0.1 | 7.0 | 7.0 | 0.0 | S |
| 142 | 34.65 | 243ca | 0.35 | tDCE | 65 | 1 | 7.0 | 7.0 | 0.0 | S |
| 143 | 34.475 | 243ca | 0.525 | tDCE | 65 | 1.5 | 7.0 | 6.0 | 1.0 | B |
| 144 | 34.5 | 243ca | - | tDCE | 65 | - | 7.0 | 4.6 | 2.4 | × |
| 145 | 34.9999825 | 244cb | 0.0000175 | tDCE | 65 | 0.00005 | 7.0 | 6.0 | 1.0 | B |
| 146 | 34.999965 | 244cb | 0.000035 | tDCE | 65 | 0.0001 | 7.0 | 6.3 | 0.7 | A |
| 147 | 34999825 | 244cb | 0.000175 | tDCE | 65 | 0.0005 | 7.0 | 7.0 | 0.0 | S |
| 148 | 34.9965 | 244cb | 0.0035 | tDCE | 65 | 0.01 | 7.0 | 7.0 | 0.0 | S |
| 149 | 34.965 | 244cb | 0.035 | tDCE | 65 | 0.1 | 7.0 | 7.0 | 0.0 | S |
| 150 | 34.65 | 244cb | 0.35 | tDCE | 65 | 1 | 7.0 | 7.0 | 0.0 | S |
| 151 | 34.475 | 244cb | 0.525 | tDCE | 65 | 1.5 | 7.0 | 6.0 | 1.0 | B |
| 152 | 34.5 | 244cb | - | tDCE | 65 | - | 7.0 | 4.6 | 2.4 | × |
| 153 | 34.9999825 | 244da | 0.0000175 | tDCE | 65 | 0.00005 | 7.0 | 6.0 | 1.0 | B |
| 154 | 34.999965 | 244da | 0.000035 | tDCE | 65 | 0.0001 | 7.0 | 6.3 | 0.7 | A |
| 155 | 34999825 | 244da | 0.000175 | tDCE | 65 | 0.0005 | 7.0 | 7.0 | 0.0 | S |
| 156 | 349965 | 244da | 0.0035 | tDCE | 65 | 0.01 | 7.0 | 7.0 | 0.0 | S |
| 157 | 34.965 | 244da | 0.035 | tDCE | 65 | 0.1 | 7.0 | 7.0 | 0.0 | S |
| 158 | 34.65 | 244da | 0.35 | tDCE | 65 | 1 | 7.0 | 7.0 | 0.0 | S |
| 159 | 34.475 | 244da | 0.525 | tDCE | 65 | 1.5 | 7.0 | 6.0 | 1.0 | B |
| 160 | 34.5 | 244da | - | tDCE | 65 | - | 7.0 | 4.6 | 2.4 | × |
| 161 | 34.9999825 | 253bb | 0.0000175 | tDCE | 65 | 0.00005 | 7.0 | 6.0 | 1.0 | B |
| 162 | 34.999965 | 253bb | 0.000035 | tDCE | 65 | 0.0001 | 7.0 | 6.3 | 0.7 | A |
| 163 | 34999825 | 253bb | 0.000175 | tDCE | 65 | 0.0005 | 7.0 | 7.0 | 0.0 | S |
| 164 | 34.9965 | 253bb | 0.0035 | tDCE | 65 | 0.01 | 7.0 | 7.0 | 0.0 | S |
| 165 | 34.965 | 253bb | 0.035 | tDCE | 65 | 0.1 | 7.0 | 7.0 | 0.0 | S |
| 166 | 34.65 | 253bb | 0.35 | tDCE | 65 | 1 | 7.0 | 7.0 | 0.0 | S |
| 167 | 34.475 | 253bb | 0.525 | tDCE | 65 | 1.5 | 7.0 | 6.0 | 1.0 | B |
| 168 | 34.5 | 253bb | - | tDCE | 65 | - | 7.0 | 4.6 | 2.4 | × |
| 169 | 34.9999825 | CHCl3 | 0.0000175 | tDCE | 65 | 0.00005 | 7.0 | 6.0 | 1.0 | B |
| 170 | 34.999965 | CHCl3 | 0.000035 | tDCE | 65 | 0.0001 | 7.0 | 6.3 | 0.7 | A |
| 171 | 34.999825 | CHCl3 | 0.000175 | tDCE | 65 | 0.0005 | 7.0 | 7.0 | 0.0 | S |
| 172 | 34.9965 | CHCl3 | 0.0035 | tDCE | 65 | 0.01 | 7.0 | 7.0 | 0.0 | S |
| 173 | 34.965 | CHCl3 | 0.035 | tDCE | 65 | 0.1 | 7.0 | 7.0 | 0.0 | S |
| 174 | 34.65 | CHCl3 | 0.35 | tDCE | 65 | 1 | 7.0 | 7.0 | 0.0 | S |
| 175 | 34.475 | CHCl3 | 0.525 | tDCE | 65 | 1.5 | 7.0 | 6.0 | 1.0 | B |
| 176 | 34.5 | CHCl3 | - | tDCE | 65 | - | 7.0 | 4.6 | 2.4 | × |

From the evaluation results shown in Table 1-1, Table 1-2, Table 2-1 and Table 2-2, it is seen that the solvent compositions in Examples of the present invention all have acidification suppressed as compared to in Comparative Examples. Further, it is also seen that corrosion of the metal specimens was suppressed in Examples more than in Comparative Examples. It is thereby evident that the solvent compositions of the present invention not only have excellent stability, but also are capable of inhibiting metal corrosion.

Further, Ex. 2, 10, 18, 26, 34, 42, 90, 98, 106, 114, 122 and 130, which contain 0.0001 mass% of an olefin such as 1230xd, 1231xd, 1242xf, 1243yf, 1231yd or 1232yd as the second component, have a smaller difference in pH before and after the test, as compared with Ex. containing 0.0001 mass% of a compound other than such an olefin as the second component, and thus, they are superior in their action as stabilizers.

The entire specification, claims and abstract of Japanese Patent Application No. 2021-128276, filed on August 4, 2021, are hereby cited and incorporated herein as the disclosure of the specification of the invention.

The entire disclosure of Japanese Patent Application No. 2021-128276 filed on August 4, 2021 including specification, claims, drawings and summary is incorporated herein by reference in its entirety.

## Claims

1. A solvent composition comprising, as a first component, 1-chloro-2,3,3-trifluoropropene, and, as a second component, at least one member selected from the group consisting of 1,2,3,3-tetrachloropropene, 1,2,3-trichloro-3-fluoropropene, 1,3,3-trichloro-2-fluoropropene, 1,3-dichloro-2,3-difluoropropene, 2-chloro-3,3-difluoropropene, 2,3,3-trifluoropropene, 1,3-dichloro-1,2,2-trifluoropropane, 1-chloro-1,2,2,3-tetrafluoropropane, 2-chloro-1,1,3,3-tetrafluoropropane, 2-chloro-1,1,2-trifluoropropane and chloroform, **characterized in that** the ratio of the total content of the second component to the sum of the content of 1-chloro-2,3,3-trifluoropropene and the total content of the second component, is from 0.0001 to 1.0 mass%.

2. The solvent composition according to Claim 1, which contains, as the second component, at least one member selected from the group consisting of 1,2,3,3-tetrachloropropene, 1,2,3-trichloro-3-fluoropropene, 1,3,3-trichloro-2-fluoropropene, 1,3-dichloro-2,3-difluoropropene, 2-chloro-3,3-difluoropropene and 2,3,3-trifluoropropene.

3. The solvent composition according to Claim 1 or 2, which further contains, as a third component, at least one member selected from the group consisting of trans-1,2-dichloroethylene, nonafluorobutoxymethane, nonafluorobutoxyethane, ethanol, isopropanol, 1,2-dichloro-2,3,3-trifluoropropane and 1,2-dichloro-3,3-difluoropropene.

4. The solvent composition according to any one of Claims 1 to 3, wherein the ratio of the content of 1-chloro-2,3,3-trifluoropropene in the solvent composition is at least 30 mass%.

5. A cleaning method **characterized in that** the solvent composition as defined in any one of Claims 1 to 4 is brought into contact with an article to remove stains attached to the surface of the article.

6. The cleaning method according to Claim 5, wherein the material of at least a portion of the article surface to be in contact with the solvent composition is metal.

7. A composition for forming a coating film, **characterized by** comprising a non-volatile organic compound and the solvent composition as defined in any one of Claims 1 to 4.

8. A method for producing a substrate with a coating film, **characterized in that** the composition for forming a coating film as defined in Claim 7 is applied to the surface of a substrate, and then the solvent composition is evaporated off to form a coating film containing the non-volatile organic compound.

9. The method for producing a substrate with a coating film according to Claim 8, wherein the material of at least a portion of the substrate surface to be in contact with the solvent composition is metal.

10. An aerosol composition comprising a propellant and the solvent composition as defined in any one of Claims 1 to 4.

11. A heat transfer medium for a thermal cycling system containing the solvent composition as defined in any one of Claims 1 to 4.
